(19) Europäisches Patentamt / European Patent Office / Office européen des brevets

(11) **EP 2 418 229 A1**

(12) **EUROPEAN PATENT APPLICATION**

(43) Date of publication:
**15.02.2012 Bulletin 2012/07**

(21) Application number: **11175611.0**

(22) Date of filing: **27.07.2011**

(51) Int Cl.:
*C08F 220/06* (2006.01)     *C09D 133/02* (2006.01)
*C08F 2/22* (2006.01)     *C09G 1/04* (2006.01)
*C09D 133/04* (2006.01)     *C09D 125/04* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.08.2010 US 373444 P**

(71) Applicant: **Rohm and Haas Company Philadelphia, Pennsylvania 19106-2399 (US)**

(72) Inventors:
• **Karikari, Afia S.**
  **Bristol, PA Pennsylvania 19007 (US)**
• **Tysak, Theodore**
  **Ambler, PA Pennsylvania 19002 (US)**

(74) Representative: **Buckley, Guy Julian Patent Outsourcing Limited 1 King Street Bakewell Derbyshire DE45 1DZ (GB)**

(54) **Aqueous coating composition**

(57)     A method for preparing a polymer containing zinc ion, calcium ion or magnesium ion; polymerized residues of 0.5 to 7 wt% itaconic acid and 4 to 15 wt% (meth)acrylic acid. The polymer has a Tg from 50 to 110°C. The method includes forming a polymerization mixture having from 0.5 to 8 wt% of a di-(meth)acrylate salt of zinc, calcium or magnesium ion.

EP 2 418 229 A1

## Description

This invention relates to an aqueous coating composition particularly useful as a floor finish.

Aqueous coating compositions used on floors and other surfaces have traditionally used transition metal ions, e.g., zinc, to add in crosslinking. More recent efforts have been directed towards using environmentally more acceptable metal ions such as calcium and magnesium as ionic crosslinkers. For example, U.S. Pub. No. 2007/0254108 discloses compositions using calcium. However, none of the prior art compositions provides a combination of properties that would satisfy commercial needs.

The problem addressed by the present invention is to provide an improved aqueous coating composition using metals as ionic crosslinkers.

STATEMENT OF INVENTION

The present invention provides a method for preparing a polymer comprising: (a) at least one of zinc ion, calcium ion and magnesium ion; and (b) polymerized residues of: (i) from 0.5 to 7 wt% of itaconic acid; and (ii) from 4 to 15 wt% (meth)acrylic acid; wherein the polymer has a Tg from 50 to 110°C. The method comprises forming a polymerization mixture comprising from 0.5 to 8 wt% based on total weight of monomers of a di-(meth)acrylate salt of at least one of zinc, calcium and magnesium ion.

The present invention is further directed to a method for coating a substrate by applying to the substrate an aqueous coating composition comprising the polymer made according to the method of this invention.

DETAILED DESCRIPTION

Percentages are weight percentages (wt%), temperatures are in °C and stability constants are measured at ambient temperature (typically 20-25°C), unless specified otherwise. Weight percentages of monomers are based on the total weight of monomers in the polymerization mixture. Percentages listed with formulation ingredients are the percent solids of the aqueous emulsion or dispersion. "Equivalents" of calcium, magnesium and zinc are stated as equivalents per equivalent of acid in the polymer. All polymer Tg values were measured by differential scanning calorimetry (DSC), using a heating rate of 10 °C per minute with the Tg taken at the midpoint of the transition.

As used herein the term "(meth)acrylic" refers to acrylic and/or methacrylic, and "(meth)acrylate" refers to acrylate and/or methacrylate. The term "(meth)acrylamide" refers to acrylamide (AM) and/or methacrylamide (MAM). "Acrylic monomers" include acrylic acid (AA), methacrylic acid (MAA), esters of AA and MAA, itaconic acid (IA), crotonic acid (CA), acrylamide (AM), methacrylamide (MAM), and derivatives of AM and MAM, e.g., alkyl (meth)acrylamides. Esters of AA and MAA include, but are not limited to, alkyl, hydroxyalkyl, phosphoalkyl and sulfoalkyl esters, e.g., methyl methacrylate (MMA), ethyl methacrylate (EMA), butyl methacrylate (BMA), isobutyl methacrylate (iBMA), hydroxyethyl methacrylate (HEMA), hydroxyethyl acrylate (HEA), methyl acrylate (MA), ethyl acrylate (EA), butyl acrylate (BA), ethylhexyl acrylate (EHA) and phoshoethylmethacrylate (PAM). The term "vinyl monomers" refers to monomers that contain a carbon-carbon double bond that is connected to a heteroatom such as nitrogen or oxygen. Examples of vinyl monomers include, but are not limited to, vinyl acetate, vinyl formamide, vinyl acetamide, vinyl pyrrolidone, vinyl caprolactam, and long chain vinyl alkanoates such as vinyl neodecanoate, and vinyl stearate. The term "aromatic-acrylic polymers" refers to polymers of acrylic monomers and vinyl aromatic monomers or vinyl cyclohexyl monomers. Vinyl aromatic monomers have one ethylenically unsaturated group per molecule. Examples of vinyl aromatic monomers include 4-methylstyrene, 2-methylstyrene, 3-methylstyrene, 4-methoxystyrene, 2-hydroxymethylstyrene, 4-ethylstyrene, 4-ethoxystyrene, 3,4-dimethylstyrene, 2-chlorostyrene, 3-chlorostyrene, 4-chloro-3-methylstyrene, 4-t-butylstyrene, 2,4-dichlorostyrene, 2,6-dichlorostyrene, 1-vinylnapthalene, cyclohexyl methacrylate, benzyl methacrylate and benzyl acrylate. Preferred vinyl aromatic monomers include vinylpyridines, styrene (Sty) and 4-methylstyrene (vinyltoluene). The term "styrene-acrylic polymers" refers to polymers of acrylic monomers and copolymers comprising at least 50% of acrylic monomers, styrene and vinyltoluene. Preferably, styrene-acrylic polymers have at least 75% of monomer residues derived from (meth)acrylic acids, (meth)acrylates or styrene, more preferably at least 85%, and most preferably at least 95%. Preferably, any remaining monomer units are derived from vinyl monomers.

For purposes of this invention, alkyl groups are straight or branched chain alkyl groups or aralkyl or alkyl carbocyclic groups, such as alkylphenyl groups. In some embodiments of the invention, the alkyl groups are of synthetic origin and may contain a range of chain lengths. Preferably, alkyl groups are straight or branched chain acyclic alkyl groups.

The aqueous coating composition comprises ions of zinc, calcium, magnesium or a combination thereof; preferably calcium, magnesium or a combination thereof; preferably calcium. Preferably, the composition is substantially free of transition metal ions, e.g., it contains less than 0.5%, alternatively less than 0.2%, alternatively less than 0.1%, alternatively less than 0.05%. Preferably, the composition contains at least 0.1 equivalents of zinc, calcium, magnesium or a combination thereof per equivalent of acid in the polymer, preferably at least 0.15 equivalents, preferably at least 0.2 equivalents, preferably at least 0.23 equivalents; preferably the composition contains no more than 0.7 equivalents of calcium and/or magnesium per equivalent of acid in the polymer, preferably no more than 0.6 equivalents, preferably no more than 0.5 equivalents, preferably no more than 0.45 equivalents, preferably no more than 0.4 equivalents, preferably no more than 0.35 equivalents. Equivalents of acid in the polymer are calculated from the total acid content of the polymer, including carboxylic acid groups, phosphonate groups, etc.

Preferably, the di-(meth)acrylate salt of at least one of zinc, calcium and magnesium ion is selected from calcium diacrylate (CaDA), zinc dimethacrylate (ZnDMA) and zinc diacrylate (ZDA).

Preferably, the polymer further comprises monomer residues of $C_1$-$C_8$ alkyl (meth)acrylate(s). Preferably, the $C_1$-$C_8$ alkyl (meth)acrylate(s) comprise an alkyl methacrylate and an alkyl acrylate, preferably a $C_1$-$C_2$ alkyl methacrylate (MMA or EMA) and a $C_4$-$C_8$ alkyl acrylate (e.g., BA or EHA), preferably MMA and a $C_4$-$C_8$ alkyl acrylate, preferably MMA and BA. Preferably the total amount of $C_1$-$C_8$ alkyl (meth)acrylate monomer residues is from 34% to 70%. Preferably, the total amount of $C_1$-$C_8$ alkyl (meth)acrylate monomer residues is at least 36%, preferably at least 38%, preferably at least 40%, preferably at least 42%, preferably at least 44%, preferably at least 46%, preferably at least 48%. Preferably, the total amount of $C_1$-$C_8$ alkyl (meth)acrylate monomer residues is no greater than 68%, preferably no greater than 66%, preferably no greater than 64%, preferably no greater than 62%, preferably no greater than 60%, preferably no greater than 58%. Preferably, the polymer has a Tg of at least 55°C, preferably at least 60°C, preferably at least 65°C, preferably at least 70°C, preferably at least 75°C, preferably at least 80°C; preferably the Tg is no more than 105°C, preferably no more than 100°C, preferably no more than 95°C, preferably no more than 90°C, preferably no more than 85°C. One skilled in the art would be able to select monomers to arrive at any desired Tg value. The identities and amount of the individual monomers are not critical if the Tg is in the range stated above.

Preferably, the polymer contains at least 0.7% polymerized residues of itaconic acid, preferably at least 0.9%, preferably at least 1.1%, preferably at least 1.3%, preferably at least 1.5%, preferably at least 1.6%, preferably at least 1.7%; preferably the polymer contains no more than 6.5% polymerized residues of itaconic acid, preferably no more than 6%, preferably no more than 5.5%, preferably no more than 5%, preferably no more than 4.5%, preferably no more than 4%, preferably no more than 3.5%, preferably no more than 3%, preferably no more than 2.5%.

Preferably, the polymer contains at least 5% polymerized residues of methacrylic acid, preferably at least 6%, preferably at least 7%, preferably at least 8%; preferably, the polymer contains no more than 14% polymerized residues of methacrylic acid, preferably no more than 13%, preferably no more than 12%, preferably no more than 11%.

Preferably, the polymer contains from 25 to 50 wt% of at least one vinyl aromatic monomer. Preferably, the polymer contains at least 28% polymerized residues of at least one vinyl aromatic monomer, preferably at least 30%, preferably at least 32%; preferably, the polymer contains no more than 45% polymerized residues of at least one vinyl aromatic monomer, preferably no more than 42%, alternatively no more than 40%, preferably no more than 38%. Preferably, the polymer comprises residues of styrene.

Crosslinkers are monomers having two or more ethylenically unsaturated groups, and may include, e.g., divinylaromatic compounds, di-, tri- and tetra-(meth)acrylate esters, di-, tri- and tetra-allyl ether or ester compounds and allyl (meth)acrylate. Preferred examples of such monomers include divinylbenzene (DVB), trimethylolpropane diallyl ether, tetraallyl pentaerythritol, triallyl pentaerythritol, diallyl pentaerythritol, diallyl phthalate, diallyl maleate, triallyl cyanurate, Bisphenol A diallyl ether, allyl sucroses, methylene bisacrylamide, trimethylolpropane triacrylate, allyl methacrylate (ALMA), ethylene glycol dimethacrylate (EGDMA), hexane-1,6-diol diacrylate (HDDA) and butylene glycol dimethacrylate (BGDMA). Especially preferred crosslinkers include DVB, ALMA, EGDMA, HDDA and BGDMA. Preferably, the amount of polymerized crosslinker residue in the polymer is at least 0.1%, preferably at least 0.2%, preferably at least 0.3%, preferably at least 0.5%, preferably at least 0.7%, preferably at least 1%. Preferably, the amount of crosslinker residue in the polymer is no more than 2%, preferably no more than 1.8%, preferably no more than 1.5%, preferably no more than 1%, preferably no more than 0.5%, preferably no more than 0.3%, preferably no more than 0.2%, preferably no more than 0.1%. Preferably, the molecular weight of the crosslinker is from 180 to 330, alternatively from 200 to 300. Preferably, the crosslinker is diethylenically unsaturated, e.g., DVB, ALMA or di(meth)acrylate esters of diols. Preferably, the polymer comprises a diethylenically unsaturated crosslinker with molecular weight from 100 to 250, alternatively from 110 to 230, alternatively from 110 to 200, alternatively from 115 to 160. Both triethylenically unsaturated crosslinker and diethylenically unsaturated crosslinker may be present.

Preferably, the aqueous coating composition comprises from 10% to 25% of the polymer, preferably from 11% to 20%, preferably from 12% to 18%, preferably from 13% to 16%. Percentages are calculated based on the amount of polymer solids in the entire weight of the coating composition. In some embodiments, more than one polymer according to this invention may be present, with the total amount of polymers being within the amounts specified above.

In some embodiments of the invention, the polymers used in this invention are prepared by copolymerizing the monomers using well known emulsion polymerization processes, and any other suitable processes known in the art, using, for example, a free-radical initiator such as peroxygen compounds or diazo compounds and, optionally, chain transfer agents. Preferably, itaconic acid is added to the polymerization mixture in the same stream as the di-(meth)acrylate salt of at least one of calcium, magnesium and zinc. Preferably this stream also contains water and a surfactant, preferably a nonionic surfactant; preferably, the weight ratio of itaconic acid to the di-(meth)acrylate salt of at least one of calcium, magnesium and zinc is from 0.1:1 to 3:1, preferably from 0.2:1 to 2.5:1, preferably from 0.3:1 to 2:1, preferably from 0.3:1 to 1.5:1. The remaining monomers are added to the polymerization mixture in one or more streams separate from the one containing itaconic acid and the di-(meth)acrylate salt of at least one of calcium, magnesium and zinc The length of the primary polymer chains is typically such that, if any crosslinks were removed, the molecular weight ($M_w$) would be in the range of about 50,000 to 10,000,000, alternatively from 100,000 to 5,000,000, alternatively from 200,000 to 2,000,000.

Preferably, the polymers of this invention are aromatic-acrylic polymers, more preferably styrene-acrylic polymers. Preferably, the aqueous coating composition has at least 45% water, alternatively at least 50%, alternatively at least 55%, alternatively at least 60%, alternatively at least 65%. Preferably, the aqueous composition contains no more than 10% organic solvent, alternatively no more than 8%, alternatively no more than 6%. In some embodiments, the composition contains at least 2% organic solvent, alternatively at least 4%, alternatively at least 4.5%.

An important feature of the polymers used in the method of the present invention is the gel fractions or percent gel of the polymer. Uncrosslinked amorphous polymers, polymers that are lightly crosslinked, or those that have not undergone a sufficient degree of intermolecular crosslinking will be highly solvated by appropriate solvents. Because of their reduced free volume, polymers which have been sufficiently crosslinked will be solubilized to a lesser extent. These less solubilized polymer molecules will be swollen to form a soft gel which can be centrifuged out of the organic solvent solution. Other variables, such as polymer molecular weight, polymer composition, the composition of the solvent selected, and the affinity of the polymer and solvent for each other, will influence the gel fraction.

For polymers based on acrylic esters and styrene as the major monomers, tetrahydrofuran (THF) is an appropriate solvent for determining gel fraction. More hydrophilic polymers, such as those based on moderately high levels of acidic or non-ionogenic hydrophilic monomers, are more readily solvated by acetone. Other solvents may be selected as appropriate to the composition of the polymers to be tested, but because the polymer is added to the solvent from an aqueous emulsion, it is preferred that the solvent be compatible or miscible with water. U.S. Pat. No. 5, 676, 741 may be consulted for further general and specific details regarding the determination of gel fraction values for polymers.

Typically, gel fraction values may be determined by charging a weighed aliquot of solvent ($W_v$) to a weighed sample of polymer emulsion ($W_p$) of known solids content ($W_s$) into a centrifuge tube. The mixture is then stirred overnight and subjected to ultracentrifugation. A weighed aliquot of the supernatant solution is then evaporated to dryness to the determine the solid fraction ($S_s$). The soluble fraction and gel fraction are calculated as follows:

$$\text{Soluble Fraction} = [S_s(W_v + W_p - W_s)]/W_s$$

$$\text{Gel Fraction} = [1 - \text{Soluble Fraction}]$$

The swell ratio was obtained by determining the weight of undissolved gel after the solvent phase was removed and dividing the result by the weight of the polymer contained in that gel.

The average particle diameter of the emulsion polymer particles is typically from 40 nanometers to 1000 nanometers, preferably from 40 nanometers to 300 nanometers. Particle sizes herein were those measured by dynamic light scattering on a Brookhaven BI-90 analyzer. Latex samples were diluted to the appropriate concentration with 1N KCl (aq).

The floor coating composition of the present invention optionally may include other ingredients, e.g., waxes, alkali-soluble resins, plasticizers, wetting aids, defoamers, soluble or dispersed biocides, polyurethane dispersions, silicates, etc. The alkali-soluble resins of this invention are in the range of 0% to 10%, more preferably 2% to 7%. The waxes are used in a range of 5% to 20%, more preferable 7% to 15%.

In the method of this invention, the aqueous composition is applied to a surface, e.g., floors, walls, counter tops, roofs, etc. Materials to which the composition may be applied include stone, concrete, asphalt, roofing substrates, linoleum, tile, wood, particle or fiber board, glass, leather, paper and cardboard. Preferably, the composition is applied to floors. Preferably, the composition is cured under ambient conditions without external heating, ventilation or humidity control, although these may be used as needed.

Evaluating the Performance of Floor Polish Coatings

In order to properly evaluate the performance of an emulsion polymer intended for use in a polish vehicle, it is necessary that the polymer be formulated as a polish. The formulation of the emulsion polymers of this invention are done in a manner common and well understood to those versed in this art. The ingredients used, and their proportions and manner of addition are the same as is commonly practiced with conventional technology emulsion polymers. The ingredients used in a formulated floor polish consists of emulsion polymer, wax emulsions, Alkali Soluble Resins (ASR), film formation aids, leveling agents, and wetting agents. The levels of coalescing solvents, plasticizing solvents and leveling agents used in a polish formulation is dictated by the compatibility of the emulsion polymer (overall composition of the polymer) with the selected solvents and additives and the minimum filming temperature of the emulsion polymer. For the emulsion polymer of the examples listed here, the coalescent, plasticizer and additive levels were as given in the formulation details, though minor adjustments were made as was appropriate to ensure that each of the polymer examples formed a glossy, apparently coherent film.

Test Methods:

Various tests were used to evaluate the performance of the emulsion polymer vehicle as a removable floor polish (or floor coating) in this invention. The method for applying the coating compositions is described in Annual Book of ASTM Standards, Section 15, Volume 15.04, test procedure ASTM D 3153, except that 0.04 mL. per square inch coating was applied to the substrates. A total of 2 coats were applied. The floor polish formulation was as follows:

| Ingredient | Grams | Function |
|---|---|---|
| Water | 42.0 | Diluent |
| CAPSTONE FS-61 (1%)[1] | 1.0 | Wetting agent |
| Diethylene Glycol Monoethyl Ether | 7.0 | Coalescent |
| KODAFLEX TXIB[2] | 1.0 | Plasticizer |
| Tributoxy Ethyl Phosphate | 1.4 | Leveling Agent |
| Polymer 38% | 41.3 | Vehicle |
| CHEMREZ 30 (30%)[3] | 2.2 | Alkali-Soluble-Resin |
| ME 44730 (30%)[4] | 4.1 | Polyethylene Wax Emulsion |
| | | |
| Total | 100 | |
| [1]available from DUPONT, Wilmington, DE [2]available from Eastman Chemical, Kingsport, TN [3]available from ChemCor, Chester, NY [4]available from Michelman, Cincinnati, OH | | |

Black Heel Mark and Scuff Resistance

The method for determining black heel and scuff resistance is described in Chemical Specialty Manufacturers Association Bulletin No. 9-73, except commercially available rubber shoe heels were used in place of the recommended 2" (5.1 cm) rubber cubes. We determined the percentage of the coated substrate area which was covered by black heel and scuff marks; this is conveniently performed with transparent graph paper. Black heel marks are an actual deposition of rubber onto or into the coating. A scuff mark, on the other hand, results from a physical displacement of the coating and appears as an area of reduced gloss. Scuff and black heel marks can occur simultaneously at the point where the heel impacts the substrate; i.e., upon removal of a black heel mark, a scuff may be present.

Gloss and Recoat Gloss

The method for determining the gloss performance and recoat gloss performance of polish formulations is described in Annual Book of ASTM Standards, Section 15, Volume 15.04, test procedure ASTM D 1455. Gloss determined on black vinyl composition tile.

Detergent Resistance

The method for determining detergent resistance is described in Annual Book of ASTM Standards, Section 15, Volume 15.04, test procedure ASTM D 3207, except 1/20 dilution of GP Forward General Purpose Cleaner (Diversey Inc. Sturtevant, Wis. 53177 USA) in water was used as test detergent solution.

Removability

The method for determining polish removability is described in Annual Book of ASTM Standards, Section 15, Volume 15.04, test procedure ASTM D 1792, except ¼ dilution of FREEDOM (Diversey Inc. Sturtevant, Wis. 53177 USA) in water was used as the test stripping solution.

Tack-Free Time Test Method

The surface coatings tack-free time is determined using the ZAPON tack tester. The tack tester was fabricated out of a 1-inch (2.54 cm) wide bent piece of aluminum sheet metal that is 1/16th of an inch (1.6 mm) thick. It is sized so that a 1 inch square section will rest flatly on the surface. It is weighted so that when a five gram weight is placed on the center of the aluminum strip it will stand upright. If a weight less than five grams is placed on the center of the aluminum strip it will fall over. The tack tester is placed on the surface of the film with a 500-gram weight placed on the tester. The weight is kept on the tester for five seconds then removed. If the tester falls over within five seconds the coating passes the Zapon-tack free test. The time that has elapsed from when the coating was applied is recorded as the Zapon tack free time. The conditions: 73 °F (23°C) and 16% relative humidity.

Polymer compositions

| Ex. | BA wt% | MMA wt% | STY wt% | MAA wt% | IA wt % | CaDA wt% | Zn DMA wt% | Ca(OH)$_2$ wt% | ZnO wt% | Ca Eq. | Zn Eq. |
|---|---|---|---|---|---|---|---|---|---|---|---|
| 1 | 21.2 | 25.8 | 40.0 | 9.1 | 1.9 | 2.0 | - | - | - | 0.18 | - |
| 2 | 21.1 | 25.9 | 40.0 | 7.0 | 2.0 | 4.0 | - | - | - | 0.43 | - |
| 3 | 21.2 | 25.8 | 40.0 | 9.1 | 1.9 | - | 2.0 | - | - | - | 0.13 |
| 4 | 21.1 | 25.9 | 40.0 | 7.0 | 2.0 | - | 4.0 | - | - | - | 0.30 |
| 5 | 21.6 | 26.4 | 40.8 | 9.3 | 1.9 | - | - | - | - | - | - |
| 6 | 21.6 | 26.4 | 40.8 | 9.3 | 1.9 | | - | 2.2 | - | 0.43 | - |
| 7 | 21.6 | 26.4 | 40.8 | 9.3 | 1.9 | | - | - | 1.7 | - | 0.30 |

Polymer characterization data

| Ex # | Solids wt% | PS nm | Viscosity cPs | pH | Tg °C | Solubles wt% | SR wt% |
|---|---|---|---|---|---|---|---|
| 1 | 38.8 | 103.9 | 25 | 8.23 | 77 | 42.7 | 10.2 |
| 2 | 38.5 | 108.9 | 38 | 8.33 | 75 | 36.6 | 8.6 |
| 3 | 36.5 | 98.3 | 15 | 8.04 | 81 | 46.8 | 13.6 |
| 4 | 38.1 | 125.8 | 17 | 8.17 | 79 | 44.2 | 10.3 |
| 5 | 38.2 | 57.4 | 81 | 8.62 | 71 | 82.2 | 3.2 |
| 6 | 37.5 | 55.1 | 59 | 9.09 | - | 28.1 | 8.8 |
| 7 | 37.3 | 57 | 38 | 8.41 | - | 48.2 | 13.2 |
| PS=particle size SR=swell ratio | | | | | | | |

Floor Polish Application Results

| | Ex. 1 | Ex. 2 | Ex.3 | Ex. 4 | Ex. 5 (comp.) | Ex.6 (comp.) | Ex. 7 (comp.) | Ex. 8 (comp.) |
|---|---|---|---|---|---|---|---|---|
| Gloss 1ct 60 degree/20 degree | 43/14 | 38/11 | 43/15 | 35/7 | 40/12 | 40/12 | 42/13 | 39/10 |
| Gloss 2ct 60 degree/20 degree | 64/24 | 69/25 | 62/26 | 57/20 | 58/23 | 64/28 | 68/30 | 58/24 |
| Detergent Resistance after 1 Day | Very Good | Very Good | Very Good | Very Good | Very Good | Very Good | Very Good | Very Good |
| Black Heel Mark Resistance* | 0.4 | 0.4 | 0.4 | 0.5 | 1 | 0.6 | 0.7 | 0.5 |
| Scuff Mark Resistance* | 0.4 | 0.4 | 0.5 | 0.5 | 0.7 | 0.7 | 0.4 | 0.4 |
| Removability | Exc | Exc | Exc | Exc | Fair | Exc | Exc | Exc |
| Tack Rate of Dry 1 coat | 18 min | 16 min | 15 min | 15 min | 45 min | 16 min | 16 min | 15 min |
| Tack Rate of Dry 2 coat | 23 min | 25 min | 25 min | 23 min | 60 min | 23 min | 23 min | 22 min |
| | | | | | | | | |
| * Number of marks/sq.in. comp.=comparative | | | | | | | | |
| Composition of Ex.8: 22 BA/52 MMA/12 STY/8 MAA + 2.1% Zn was prepared according to technology disclosed in US 4,517,330, except that a basic salt of an alkaline metal was not added, demonstrates utility of invention compositions versus known floor polish composition. | | | | | | | | |

Preparation of polymers

Equivalents of metal ions are stated as equivalents (Eq.) of metal per equivalent of total acid monomers in the polymer.

**Example 1:** 21.2 BA/25.8 MMA/40.0 STY/9.1 MAA/1.9 IA/2.0 CaDA (0.18 equivalents Ca)

| Material | Charge Weight | Weight % |
|---|---|---|
| **Initial Charge** | | |
| D.I. Water | 425.30 | 58.98 |
| DISPONIL FES 32 (30.4)[1] | 38.07 | 1.60 |
| **Feed A** | | |
| D.I. Water | 200.50 | 27.81 |

(continued)

| Feed A | | |
| --- | --- | --- |
| DISPONIL FES 77 (33%)[2] | 11.04 | 0.51 |
| Butyl Acrylate | 152.50 | 21.15 |
| Methyl Methacrylate | 186.39 | 25.85 |
| Styrene | 288.45 | 40.00 |
| Glacial Methacrylic Acid | 65.60 | 9.10 |
| TERGITOL 15-S-40 (70%)[3] | 5.21 | 0.51 |
| **Metal Acrylate Complex Solution** | | |
| DI Water Dilution | 242.00 | 33.56 |
| DISPONIL FES 77 (33%) | 11.33 | 0.52 |
| TERGITOL 15-S-40 (70%) | 5.23 | 0.51 |
| Calcium Diacrylate | 14.42 | 2.00 |
| Itaconic Acid | 13.73 | 1.90 |
| **FEED B** | | |
| Monomer Emulsion Seed (1.39%) | 14.50 | 2.01 |
| D.I. Water, Rinse | 10.01 | 1.39 |
| **FEED C** | | |
| Ammonium Persulfate | 3.16 | 0.44 |
| D.I. Water | 14.24 | 1.97 |
| **FEED D** | | |
| Ammonium Persulfate | 0.61 | 0.09 |
| D.I. Water | 100.21 | 13.90 |
| **FEED E** | | |
| Ferrous Sulfate (0.15%) | 1.60 | 0.22 |
| D.I. Water | 3.06 | 0.42 |
| **FEED F** | | |
| t-Butylhydroperoxide (70%) | 1.24 | 0.17 |
| D.I. Water | 12.03 | 1.67 |
| **FEED G** | | |
| Isoascorbic Acid | 0.71 | 0.10 |
| D.I. Water | 12.57 | 1.74 |
| **FEED H** (same as FEED F) | | |
| **FEED I** | | |
| Isoascorbic Acid | 0.71 | 0.10 |
| D.I. Water | 12.10 | 1.68 |

(continued)

|  |  |  |
|---|---|---|
| **FEED J** | | |
| Aqua Ammonia (10%) | 62.40 | 8.65 |
| **FEED K** | | |
| KORDEK Lx5000 (50%)[4] | 0.99 | 0.07 |
| D.I. Water | 10.00 | 1.39 |
| **Final Dilution** | | |
| DI Water | 30.00 | 4.16 |
| **Total Batch Weight** | 1485.30 | |
| **Total Monomer** | 721.09 | |
| **Total Solids** | 753.04 | |
| **Theory Solids** | 50.70 | |

[1]available from Cognis Corporation, Cincinnati, OH
[2]available from Cognis Corporation, Cincinnati, OH
[3]available from DOW, Midland, MI
[4]available from DOW, Midland, MI

In a suitable reaction vessel equipped with a thermometer, condenser, and stirrer, the initial reactor charge was heated to 85-86 °C under a nitrogen blanket while Feeds A, C, D, E, F, G, H, I, J, and K were being prepared. At 85 °C, Feed B was added all at once to the reaction vessel and the temperature adjusted to 80-85°C followed by the kettle charge of Feed C. Within 2 minutes, the onset of polymerization was signaled by a temperature rise of 3° to 5°C. and a change in the appearance (color and opacity) of the reaction mixture. When the exotherm ceased, the remaining monomer mixture, Feed A, and a cofeed catalyst solution Feed D were gradually added to the reaction vessel over 90 minutes at about 85°C. At the same time, the Metal Acrylate Complex Solution was simultaneously added to the reaction vessel over 45 minutes at about 85°C. Fifteen minutes after Feeds A and D were complete; the kettle was cooled to 60 °C and chased by adding a shot of Feed E, followed by shots of Feeds F and G. A second chase, fifteen minutes later, consisted of gradually feeding Feeds H and I over 25 minutes. After the end of Feed H and I, the latex was cooled to below 40°C. Feed J was then added over 20 minutes to the reaction vessel to adjust the latex pH to 8.2 and a bactericide, Feed K was added over 10 minutes. The contents of the reactor was then filtered through 100/325 mesh screens.

The resultant filtered latex contains 2.0 wt% CaDA corresponding to 0.18 equivalents of calcium. The polymer latex had a pH of 8.2, a solids content of 38.8 wt%, particle size of 110 nm, and a Brookfield viscosity of 14 centipoise (number two spindle at 60 revolutions per minute). The latex was substantially free of coagulum, as measured by filtering through the 100 and 325 mesh screens.

**Example 2:** 21.1 BA/25.9 MMA/40.0 STY/7.0 MAA/2.0 IA/4.0 CaDA (0.43 Equivalents Ca)

The styrene acrylic dispersion of Example 2 contains 4.0 wt% CaDA corresponding to 0.43 equivalents of calcium. A polymer latex was prepared in the same manner as Example 1 except that a weight percentage of the CaDA of 4.0 by weight of monomer content was used and the polymer was prepared using a monomer emulsion containing a ratio of monomer described above.

**Example 3:** 21.2 BA/25.8 MMA/40.0 STY/9.1 MAA/1.9 IA/2.0 ZnDMA(0.13 Equivalents Zn)

Examples 3 and 4 demonstrate the change in physical and chemical properties of the invention, using a polymer prepared using a different metal acrylate monomer than that of the Example 1 and 2. Example 5 is a comparative containing no metal acrylate monomer.

The styrene acrylic dispersion of Example 3 contains 2.0 wt% Zinc dimethacrylate corresponding to 0.13 equivalents of zinc. A polymer latex was prepared in the same manner as Example 1 except that a different weight percentage of ZnDMA) of 2.0 by weight of monomer content was used and the polymer was prepared using a monomer emulsion containing a ratio of monomer described above.

**Example 4:** 21.1 BA/25.9 MMA/40.0 STY/7.0 MAA/2.0 IA/4.0 ZnDMA (0.30 Equivalents Zn)

The styrene acrylic dispersion of Example 4 contains 4.0 wt% Zinc dimethacrylate corresponding to 0.30 equivalents of zinc. A polymer latex was prepared in the same manner as Example 1 except that a different weight percentage of zinc dimethacrylate (ZnDMA) of 4.0 by weight of monomer content was used and the polymer was prepared using a monomer emulsion containing a ratio of monomer described above.

**Comparative Example 5:** 21.6 BA/ 26.4 MMA/ 40.8 STY/ 9.3 MAA/1.9 IA

The styrene acrylic dispersion of Example 5 was prepared in the same manner as Example 1 except that no metal acrylate monomer was used and the polymer was prepared using a monomer emulsion containing a ratio of monomer described above.

**Comparative Example 6:** 21.6 BA/ 26.4 MMA/ 40.8 STY/ 9.3 MAA/ 1.9 IA (2.2 wt% Ca(OH)2 (0.427 Equivalents Ca) Post Added.

The styrene acrylic dispersion of Example 6 was prepared by charging 2.2 wt% Ca(OH)$_2$ by weight of monomer content to the latex made in Comparative Example 5. This corresponds to 0.43 equivalents of calcium. The procedure involves preparing a slurry of 15.4 g of calcium hydroxide in 35.8 g DI water, adding the slurry to the latex Comparative Example 5 over 30 mins at 40 °C, and stirring for 1 h at 40°C. After 1 h, the latex was cooled and filtered. This example represents the previous method of introducing ionic crosslinks through the post addition of the divalent ion crosslinker to the already formed acid containing polymer.

**Comparative Example 7:** 21.6 BA/ 26.4 MMA/ 40.8 STY/ 9.3 MAA/ 1.9 IA (1.7 wt% ZnO (0.303 Equivalents Zn) Post Added.

The styrene acrylic dispersion of Example 7 was prepared in the same manner as Example 6 except that 1.7 wt% zinc oxide by weight of monomer content (12.0 g of ZnO in 22.7 DI water) was added. This corresponds to 0.30 equivalents of zinc.

**Claims**

1. A method for preparing a polymer comprising: (a) at least one of zinc ion, calcium ion and magnesium ion; and (b) polymerized residues of: (i) from 0.5 to 7 wt% of itaconic acid; and (ii) from 4 to 15 wt% (meth)acrylic acid; wherein the polymer has a Tg from 50 to 110°C; said method comprising forming a polymerization mixture comprising from 0.5 to 8 wt% based on total weight of monomers of a di-(meth)acrylate salt of at least one of zinc, calcium and magnesium ion.

2. The method of claim 1 in which a feed stream added to the polymerization mixture comprises itaconic acid and a di-(meth)acrylate salt of at least one of zinc, calcium and magnesium ion in a ratio of 0.1:1 to 3:1, respectively.

3. The method of claim 2 in which the polymer comprises from 0.05 to 0.6 equivalents of at least one of zinc, calcium and magnesium ion per equivalent of acid monomer units.

4. The method of claim 3 in which the polymer comprises polymerized residues of: (i) from 1 to 6 wt% of itaconic acid; (ii) from 5 to 13 wt% methacrylic acid; and (iii) from 25 to 45 wt% of at least one vinyl aromatic monomer; and wherein the polymer has a Tg from 60 to 100°C.

5. The method of claim 4 in which said at least one vinyl aromatic monomer includes styrene.

6. The method of claim 5 in which the polymer further comprises from 38 to 60 wt% polymerized residues of C$_1$-C$_8$ alkyl (meth)acrylates.

7. The method of claim 6 in which the polymer comprises from 0.1 to 0.5 equivalents of at least one of zinc, calcium and magnesium ion per equivalent of acid monomer units.

8. The method of claim 7 in which the polymer comprises polymerized residues of: (i) from 1.3 to 4 wt% of itaconic acid; (ii) from 6 to 11 wt% methacrylic acid; (iii) from 30 to 45 wt% of styrene; and (iv) from 40 to 58 wt% polymerized residues of $C_1$-$C_8$ alkyl (meth)acrylates.

9. The composition of claim 8 in which the $C_1$-$C_8$ alkyl (meth)acrylates comprise methyl methacrylate and butyl acrylate.

Europäisches
Patentamt

European
Patent Office

Office européen
des brevets

**EUROPEAN SEARCH REPORT**

Application Number

EP 11 17 5611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 6 025593 A (YUHO CHEMICALS INC) 1 February 1994 (1994-02-01) * paragraphs [0007], [0012], [0014], [0016], [0018], [0023] - [0026]; table 1; compound polymer G * -& DATABASE HCAPLUS [Online] CHEMICAL ABSTRACTS SERVICE, COLUMBUS, OHIO, US; 10 February 1960 (1960-02-10), XP002659336, retrieved from STN Database accession no. 1994:459790 * the whole document * | 1-9 | INV. C08F220/06 C09D133/02 C08F2/22 C09G1/04 C09D133/04 C09D125/04 |
| A | WO 2008/011020 A1 (OMNOVA SOLUTIONS INC [US]; KIM KYUNG DON [US]; GASTON II JAMES [US]) 24 January 2008 (2008-01-24) * paragraphs [0005], [0011], [0032], [0058], [0059], [0086], [0087]; table 1 * | 1-9 | |
| | | | TECHNICAL FIELDS SEARCHED (IPC) C08F C09D C09G |

The present search report has been drawn up for all claims

| Place of search | Date of completion of the search | Examiner |
|---|---|---|
| The Hague | 19 September 2011 | Plehiers, Mark |

## ANNEX TO THE EUROPEAN SEARCH REPORT
## ON EUROPEAN PATENT APPLICATION NO.

EP 11 17 5611

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2011

| Patent document cited in search report | | Publication date | Patent family member(s) | | Publication date |
|---|---|---|---|---|---|
| JP 6025593 | A | 01-02-1994 | JP | 2619175 B2 | 11-06-1997 |
| WO 2008011020 | A1 | 24-01-2008 | AU | 2007275778 A1 | 24-01-2008 |
| | | | EP | 2044161 A1 | 08-04-2009 |
| | | | JP | 2009543935 A | 10-12-2009 |
| | | | KR | 20090053781 A | 27-05-2009 |
| | | | US | 2009324936 A1 | 31-12-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070254108 A
- US 5676741 A
- US 4517330 A